# EUROPÄISCHE PATENTSCHRIFT

(11) **EP 2 718 187 B1**
(45) Veröffentlichungstag und Bekanntmachung des Hinweises auf die Patenterteilung: **22.05.2019**
(21) Anmeldenummer: 12740466.3
(22) Anmeldetag: 25.05.2012
(51) Int. Cl.: B64D 45/00, F16F 7/10

(54) **VORRICHTUNG ZUR REDUZIERUNG VON STRUKTURSCHWINGUNGEN VON TRAGFLÜGELN**
DEVICE FOR REDUCING STRUCTURAL VIBRATIONS OF AEROFOILS
DISPOSITIF POUR LA RÉDUCTION DES OSCILLATIONS DE LA STRUCTURE D'AILES PORTANTES

(30) Priorität: 10.06.2011 DE 102011106127
(43) Veröffentlichungstag der Anmeldung: 16.04.2014
(73) Patentinhaber: Airbus Defence and Space GmbH, 85521 Ottobrunn (DE)
(72) Erfinder: STORM, Stefan, 85816 Unterschleissheim (DE); MAIER, Rudolf, 83714 Miesbach (DE); WILDSCHEK, Andreas, 85521 Riemerling (DE)
(74) Vertreter: Isarpatent
(86) Internationale Anmeldenummer: PCT/DE2012/000545
(87) Internationale Veröffentlichungsnummer: WO 2012/167769

(56) Entgegenhaltungen:
- WO-A1-03/065142
- DE-A1- 3 935 893
- FR-A1- 2 825 769
- US-A1- 2002 066 831
- US-A1- 2005 093 302
- US-A1- 2006 255 206

## Beschreibung

Die Erfindung betrifft einen Tragflügel mit einer Vorrichtung zur Reduzierung von Strukturschwingungen.

Vor allem durch Turbulenz werden die Tragflügel von Flugzeugen zu Schwingungen angeregt, die zu hohen dynamischen Lasten und zu einer Reduktion des Passagierkomforts führen. Die Bedämpfung bzw. Kompensation der Flügelbiegeschwingungen mit Hilfe aerodynamischer Klappen ist beispielsweise aus WO 2007-061641, US 4,479,620, DE 198 41 632 oder EP 1 814 006 bekannt. Die Grundschwingung ist bei den Flügeln großer Passagier- und Transportflugzeuge relativ niederfrequent (ca. 1 Hz.) und hängt ab von verschiedenen Umständen, insbesondere der Fluggeschwindigkeit. Höhere Flügelbiegemoden beeinflussen auch den Passagierkomfort und die Bandbreite der Klappen reicht oft nicht aus, um höhere Moden ausreichend zu dämpfen. Außerdem führt ein länger dauernder dynamischer Betrieb der Klappen zu Verschleiß der Aktorik und damit zu einem erhöhten Wartungsaufwand. Ein weiterer Nachteil besteht darin, dass der Klappeneinfluss auf die Schwingungen Machzahl- und geschwindigkeitsabhängig ist. Hiervon ausgehend liegt der Erfindung die Aufgabe zugrunde, eine wirksame Dämpfung der Strukturschwingungen in den Tragflächen ohne die Anordnung von Klappen zu bewirken, um die Lebensdauer der Struktur zu erhöhen oder das Strukturgewicht durch leichtere Bauweise zu reduzieren.

Die Druckschrift US 2002/066831 A1 beschreibt ein am Äußeren eines Flügels beweglich angebrachtes Flügelspitzenelement. Sie offenbart den Oberbegriff des Anspruchs 1.

Die Druckschrift WO 03/065142 A1 beschreibt eine Dämpfungsvorrichtung mit einem Sensor und einem Schwingungserzeuger zum Erzeugen von dämpfenden Schwingungen.

Die Druckschrift FR 2 825 769 A1 beschreibt eine Vorrichtung mit einem Elektromotor mit einer Spule und einem magnetischen Schaltkreis, welcher an einer Feder befestigt ist.

Die Druckschrift US 2005/093302 A1 beschreibt einen Generator welcher Schwingungsenergie in elektrische Energie umwandelt.

Die Druckschrift US 2006/255206 A1 beschreibt ein Luftfahrzeug mit einem System zur Unterdrückung von lateralen Biegungen welches aerodynamisch während des Fluges initialisiert wird.

Die Druckschrift DE 39 35 893 A1 beschreibt ein Feder-Masse-System zur Dämpfung dynamischer Instabilitäten von umströmten Strukturen.

Erfindungsgemäß wird diese Aufgabe dadurch gelöst, dass im Bereich der Tragflügelspitzen je mindestens ein im Wesentlichen in Schwingungsbewegungsrichtung wirkender Kraftgenerator vorgesehen ist. Diese Anordnung hat den Vorteil, dass ein solcher Kraftgenerator erheblich weniger verschleißanfällig ist als aerodynamische Klappen und damit eine wirksame Schwingungsdämpfung mit vermindertem Wartungsaufwand und höherer Effektivität möglich ist. Ferner sind Kraftgeneratoren vor allem bei höheren Frequenzen effektiv. Unter "Schwingungsbewegungsrichtung" wird erfindungsgemäß die Vertikalrichtung verstanden. Also die Schwingungsrichtung der Tragflügel, die bei üblichen horizontalen Flügeln vertikal ist aber bei nach oben geneigten Tragflügeln von der Vertikalrichtung geringfügig abweichen kann.

Erfindungsgemäß sind die Kraftgeneratoren jeweils in den Tragflügel-Winglet angeordnet. Diese vertikal sich erstreckenden Flächen an den Enden der Tragflügel zur Verbesserung der Gleitzahl stellen einen geeigneten Bauraum für Kraftgeneratoren dar.

Gemäß einer vorteilhaften Weiterbildung der Erfindung ist die Eigenfrequenz der Kraftgeneratoren abgestimmt auf eine ausgewählte Schwingungsfrequenz der Tragflügel, insbesondere die zweite symmetrische oder antisymmetrische Flügelbiegeschwingung. Somit lässt sich diese Schwingung passiv dämpfen bzw. gleichzeitig zur Schwingungsdämpfung und zur Energiegewinnung nutzen. Hierfür ist keine weitere Energieversorgung notwendig, das System arbeitet vollständig autark.

Gemäß einer vorteilhaften Weiterbildung der Erfindung ist die Eigenfrequenz der Kraftgeneratoren abgestimmt auf eine mittlere Schwingungsfrequenz des interessierenden Frequenzbereichs. Damit ist nicht nur eine passive Schwingungstilgung für die identische Anregungsfrequenz erzielbar, sondern auch für davon abweichende Anregungsfrequenzen (typisch ±10%) ist eine Schwingungstilgung durch Krafteinleitung in geeigneter Amplitude und Phase möglich. Außerhalb dieses Bereichs kann zwar die Schwingungsbewegung nicht komplett minimiert werden, jedoch ist auch hier eine Reduktion der Schwingungsbewegung erreichbar. Höherharmonische Bewegungen lassen sich durch Überlagerung höherharmonischer Krafteinleitungen realisieren, jedoch ohne Ausnutzung der Schwingungsüberhöhung durch das passive System.

Gemäß einer vorteilhaften Weiterbildung der Erfindung werden zur Flatterdämpfung Kräfte in geeigneter Amplitude und Phase bei verschiedenen ausgewählten Frequenzen in die Flügelstruktur eingeleitet, um die kritische Flattergeschwindigkeit zu beeinflussen Z. B. durch Verschiebung einer oder mehrerer ausgewählter Eigenfrequenzen. Gemäß einer vorteilhaften Weiterbildung der Erfindung ist jeder Kraftgenerator als vertikal ausgerichteter Linearmotor mit beweglichem Primär- oder Sekundärteil ausgebildet. Dies ermöglicht eine baulich einfache Ausbildung des Kraftgenerators, wobei je nach Zweckmäßigkeit der Primär- oder Sekundärteil beweglich, also als Läufer, ausgebildet sein kann. Dadurch werden notwendige Bestandteile des Kraftgenerators gleichzeitig als schwingende Masse genutzt, um somit das Systemgewicht niedrig zu halten.

Vorzugsweise umfasst der Kraftgenerator einen magnetischen oder magnetisierbaren Läufer, der über mindestens eine ortsfest abgestützte Federeinrichtung sowie eine Führung vertikal oszillationsfähig ist und von einer Statorspule umgeben ist. Diese Ausbildung ist baulich besonders einfach und lässt sich in beliebiger vertikaler Länge ausführen.

Vorzugsweise ist dabei der Läufer beidendig über je eine Doppel-Balkenfeder ortsfest abgestützt. Diese Ausbildung ermöglicht bei geringem Bauaufwand gleichzeitig eine Federung und Führung des Läufers.

Vorzugsweise weist der Läufer einen Bewegungshub von 20 bis 60 cm auf. In diesem Bereich lässt sich zur Dämpfung der typischen Schwingungsfrequenzen im Bereich ca. 1 - 6 Hz eine relativ geringe Läufermasse verwenden.

Vorzugsweise weist der Läufer eine Masse von 5 bis 20 kg auf. In diesem Bereich lässt sich zur Dämpfung der typischen Schwingungsfrequenzen im Bereich ca. 1 - 6 Hz ein zur Anordnung in einem Winglet geeigneter Oszillationshub anwenden.

Gemäß einer vorteilhaften Weiterbildung der Erfindung ist der Kraftgenerator als Stromgenerator schaltbar, also zur Erzeugung von elektrischer Energie bei gleichzeitiger Dämpfung der Strukturschwingungen im Bereich der Eigenfrequenz möglich.

Gemäß einer vorteilhaften Weiterbildung der Erfindung sind je Winglet zwei oder mehr Kraftgeneratoren mit unterschiedlichen Eigenfrequenzen vorgesehen. So können unterschiedliche Schwingungsmoden optimal gedämpft werden bzw. ein auf die Grundschwingung abgestimmter Kraftgenerator kann als Stromgenerator arbeiten und die höheren Schwingungsmoden werden von dem einen oder den mehreren Kraftgeneratoren bearbeitet. Die einzelnen Kraftgeneratoren können ferner baulich kleiner gefertigt werden.

Gemäß einer Weiterbildung der Erfindung umfassen die Kraftgeneratoren bewegte Massen in Form von beweglichen Fluiden.

Diese Ausführung ermöglicht in nicht erfindungsgemäßer Weise den Einbau in Tragflügel ohne Winglets und verzichtet auf die sonst notwendige Montage von Extragewichten als notwendiger Bestandteil der Kraftgeneratoren. Vielmehr werden vorhandene Massen in Form von Tanks, beispielsweise Treibstofftanks, für diesen Zweck genutzt.

Gemäß einer nicht erfindungsgemäßen Weiterbildung dieser Ausbildung sind die Treibstofftanks in oszillierende Bewegung versetzbar. Somit muss praktisch keine zusätzliche Masse in den Außenbereich der Tragflächen vorgesehen werden.

Gemäß einer alternativen nicht erfindungsgemäßen Weiterbildung dieser Ausbildung sind im Inneren der Treibstofftanks jeweils mindestens zwei volumen-veränderbare Volumenelemente angeordnet, die oben bzw. unten im Treibstofftank angeordnet sind und zueinander um 180° versetzt oszillierend veränderbare Volumen aufweisen. Diese Ausbildung hat den Vorteil, dass außer den Blasebälgen keine bewegbaren Bauteile vorhanden sind, die gelagert bzw. geführt werden müssen. Durch die Wahl der elastischen Eigenschaften der Blasebälge, und der Wahl des Systems welches die Blasebälge oszillierend aufbläst wird die Resonanzfrequenz des Blasebalgsystems auf die Eigenfrequenz der zu regelnden Flügelschwingung abgestimmt. Durch Ausnutzung der Resonanzüberhöhung des Blasebalgsystems wird der Energieaufwand zum Aufblasen und Auslassen der Blasebälge minimiert.

Gemäß einer nicht erfindungsgemäßen Weiterbildung dieser Ausbildung ist die Resonanzfrequenz der volumenveränderbaren Volumenelemente auf die Eigenfrequenz der zu regelnden Flügelschwingung abgestimmt. Durch Ausnutzung der Resonanzüberhöhung des Blasebalgsystems wird der Energieaufwand zum Aufblasen und Auslassen der Blasebälge minimiert.

Gemäß einer nicht erfindungsgemäßen Weiterbildung der Erfindung ist ein geschlossener Hohlraum oszillierend im Treibstofftank bewegbar und wodurch das Fluid verdrängt und eine Schwerpunktverschiebung des Fluids erzielt wird.

Die Erfindung wird nachfolgend anhand eines bevorzugten Ausführungsbeispiels unter Bezugnahme auf die beigefügten Zeichnungen näher erläutert. Dabei zeigt:
- Figur 1:: eine schematische perspektivische Darstellung eines Flugzeugs mit Winglets;
- Figur 2:: eine Seitenansicht mit einem schematisch dargestellten Kraftgenerator;
- Figur 3:: eine schematische Schnittdarstellung eines nicht erfindungsgemäßen Tragflügels mit einem Treibstofftank mit Blasebälgen;
- Figur 4:: eine schematische Schnittdarstellung eines nicht erfindungsgemäßen Tragflügels mit einem oszillierbaren Treibstofftank;
- Figur 5:: eine schematische Schnittdarstellung eines nicht erfindungsgemäßen Tragflügels mit einem oszillierbaren Treibstofftank mit bewegbarem Hohlraum.

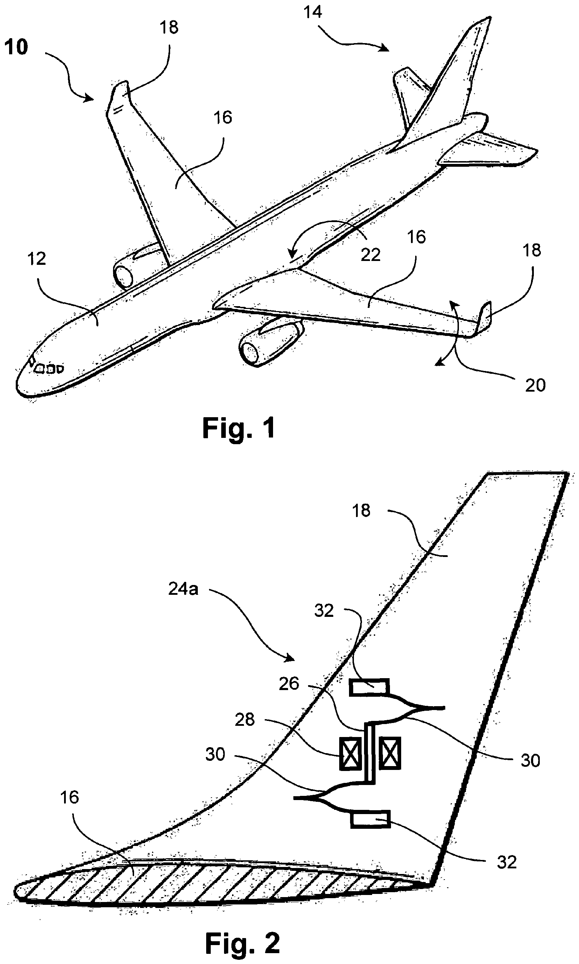

In Figur 1 ist ein Flugzeug 10 mit Rumpf 12, Leitwerk 14 und zwei Tragflügeln 16 dargestellt, an deren Enden je ein im Wesentlichen vertikal ausgerichtetes Winglet 18 angeordnet ist. Im normalen Flugbetrieb aber vor allem bei Turbulenzen neigen die Tragflügel 16 dazu, in den mit 20 bezeichneten Richtungen um die Im Bereich der Befestigung der Tragflügel 16 am Rumpf 12 liegende Schwingungsachse 22 zu schwingen.

In Figur 2 ist eine schematische Seitenansicht eines Winglets 18 dargestellt, in der ein Kraftgenerator 24a angeordnet ist. Dieser Kraftgenerator 24a besteht im Wesentlichen aus einem Läufer 26, der von einer Spule 28 umgeben ist. Beidendig sind am Läufer 26 Doppelbalkenfedern 30 befestigt, deren andere Enden an Befestigungsanschlägen 32 starr befestigt sind, die sich wiederum an Strukturbauteilen des Winglets 18 abstützen. Auf diese Weise lässt ich ein lagerloser Motor realisieren, wobei die Befestigungsanschläge 32 sowohl als Anschlag für den Läufer 26 als auch als Führungsaufhängung für den gesamten Kraftgenerator 24a dienen. Durch die beiden Doppelbalkenfedern 30 wird erreicht, dass der Läufer 26 linear geführt ist. Über die Spule 28 lässt sich der Läufer 26 entweder in Bewegung setzen bzw. halten. Alternativ lässt sich passiv durch Ausnutzung des bewegten Feldes induzierten Strom zur Energiegewinnung ableiten. Der Läufer 26 kann entweder einen Permanentmagneten enthalten, der gleichzeitig die bewegte Masse darstellt oder als Elektromagnet mit einer elektrisch beschalteten Spule ausgebildet sein.

Ein bevorzugtes Ausführungsbeispiel des erfindungsgemäßen Kraftgenerators 24a weist eine Masse des Läufers 26 von 10 kg auf. Bei einer Anregung von 4000 N und einer Schwingungsfrequenz von ca. 4,2 Hz. erfolgt eine Auslenkung des Läufers 26 von ca. 56 cm. Dabei kann ein Frequenzbereich von ca. +/-10% mit relativ geringen Zusatzkräften von ca. 700 N vollständig bedämpft werden.

Im Betrieb wird über nicht dargestellte Sensoren die Schwingung der Tragflügel 16 erfasst und einer Regeleinrichtung zugeführt, welche über einen elektrischen Verstärker die Spule 28 beaufschlagt und so ansteuert, dass die Schwingungsreduktion maximal ist. Da durch die oszillierende Bewegung des Läufers 26 im Feld der Spule 28 phasenversetzt Strom erzeugt wird, ist der Energieverbrauch des Kraftgenerators 24a im Wesentlichen beschränkt auf die elektrischen und mechanischen Verluste und belastet das Bordnetz nur geringfügig. Sofern die Fluggeschwindigkeit des Flugzeugs 10 geändert wird oder die Turbulenzsituation und damit die Schwingungsfrequenz der Tragflächenschwingungen, kann das durch entsprechende Ansteuerung der Spulen 28 berücksichtigt werden.

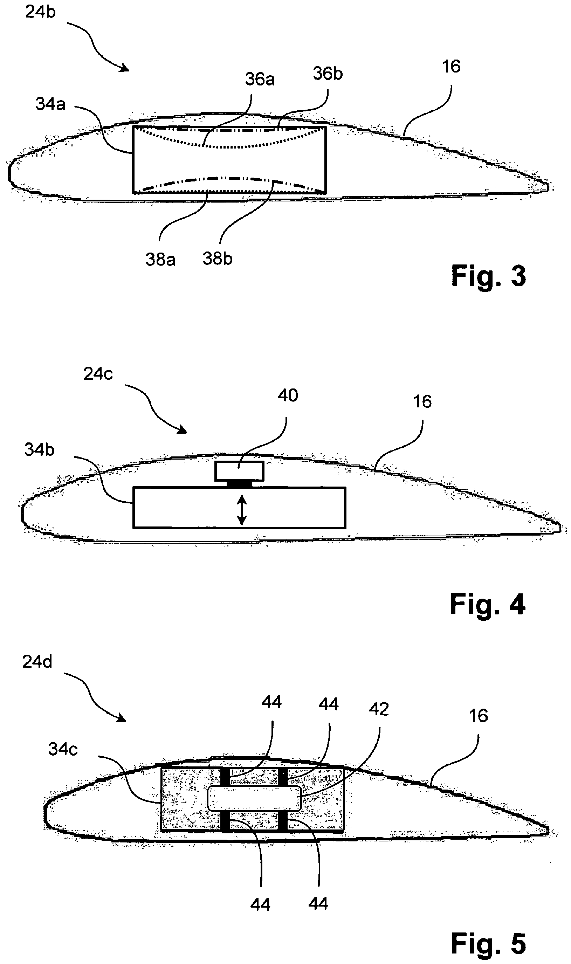

Figur 3 ist eine schematische Schnittdarstellung durch einen Tragflügel 16 im Bereich der Tragflügelspitze mit einer nicht erfindungsgemäßen Ausführung eines Kraftgenerators 24b. Schematisch dargestellt ist ein Treibstofftank 34a, der im Betrieb ständig mit Treibstoff gefüllt bleibt und nur in Ausnahme- oder Notsituationen aufgebraucht wird. Dessen Inhalt, der Treibstoff oder Der gefüllte Treibstofftank 34a selber können für den Kraftgenerator verwendet werden. In der in Figur 3 dargestellten Ausführungsform sind im Inneren des Treibstofftanks 34a oben und unten zwei Blasebalge 36, 38 angeordnet, die über nicht dargestellte Luftdruckleitungen alternativ befüllbar sind. Jeweils mit den Bezugszeichen (a), also 36a, 38a ist eine erste Stellung dargestellt, bei der der obere Blasebalg 36a gefüllt und der untere Blasebalg 38a leer ist, so dass der Schwerpunkt des im Treibstofftank 34a befindlichen Fluides unterhalb der geometrischen Mitte des Treibstofftanks 34a liegt. Jeweils mit Bezugszeichen (b), also 36b, 38b ist eine zweite Stellung dargestellt, bei der der obere Blasebalg 36a leer und der untere Blasebalg 38a gefüllt ist, so dass der Schwerpunkt des im Treibstofftank 34a befindlichen Fluides oberhalb der geometrischen Mitte des Treibstofftanks 34a liegt. Zwischen diesen beiden Endstellungen erfolgt ein Oszillationsvorgang, der das Fluid im Treibstofftank 34a vertikal oszillieren lässt und auf diese Weise einen Kraftgenerator 24b ausbildet.

Figur 4 ist wie Figur 3 eine schematische Schnittdarstellung eines Tragflügels 16 im Bereich der Tragflügelspitze mit einem Treibstofftank 34b für Treibstoff, der mittels einer Oszillationseinrichtung 40 in einer Richtung senkrecht zur Tragflügellängsachse oszillatorisch bewegbar ist und auf diese Weise den nicht erfindungsgemäßen Kraftgenerator 24c ausbildet.

Figur 5 ist wie Figur 3 und 4 eine schematische Schnittdarstellung eines Tragflügels 16 im Bereich der Tragflügelspitze mit einem Treibstofftank 34c für Treibstoff mit einer weiteren nicht erfindungsgemäßen Ausführung eines Kraftgenerators 24d. Der Treibstofftank 34c selber ist fest aber enthält im Inneren einen fluidfreien Hohlkörper 42, der über eine Anzahl Aktuatoren 44 (elektromechanisch, pneumatisch oder hydraulisch) oszillierende bewegbar ist. Dadurch wird Treibstoff verdrängt und eine Schwerpunktverschiebung des Fluids bewirkt.

### Bezugszeichenliste

- 10: Flugzeug
- 12: Rumpf
- 14: Leitwerk
- 16: Tragflügel
- 18: Winglet
- 20: Schwingungsrichtung
- 22: Schwingungsachse
- 24a-d: Kraftgenerator
- 26: Läufer
- 28: Spule
- 30: Doppelbalkenfedern
- 32: Befestigungsanschlag
- 34a, b: Treibstofftank
- 36a, b: Blasebalg
- 38a, b: Blasebalg
- 40: Oszillationseinrichtung
- 42: Hohlkörper
- 44: Aktuatoren

## Patentansprüche

1. Tragflügel (16) für ein Luftfahrzeug mit einer an der Tragflügelspitze vorgesehenen Vorrichtung zur Reduzierung von Strukturschwingungen durch einen oszillierenden Körper, **dadurch gekennzeichnet, dass** an der Tragflügelspitze ein Winglet (18) mit darin integriertem in Vertikalrichtung wirkendem Kraftgenerator (24) angeordnet ist.

2. Tragflügel (16) nach Anspruch 1, **dadurch gekennzeichnet, dass** die Eigenfrequenz der Kraftgeneratoren (24) abgestimmt ist auf die erste oder zweite symmetrische oder antisymmetrische Flügelbiegeschwingung.

3. Tragflügel (16) nach Anspruch 1, **dadurch gekennzeichnet, dass** die Eigenfrequenz der Kraftgeneratoren abgestimmt ist auf eine mittlere Schwingungsfrequenz des relevanten Frequenzbereichs.

4. Tragflügel (16) nach Anspruch 1, **dadurch gekennzeichnet, dass** jeder Kraftgenerator (24) als vertikal ausgerichteter Linearmotor mit beweglichem Primär- oder Sekundärteil (26) ausgebildet ist.

5. Tragflügel (16) nach Anspruch 4, **dadurch gekennzeichnet, dass** der Kraftgenerator (24a) einen magnetischen oder magnetisierbaren Läufer (26) umfasst, der über mindestens eine ortsfest abgestützte Federeinrichtung (30) sowie eine Führung (30) vertikal oszillationsfähig ist und von einer Statorspule (28) umgeben ist.

6. Tragflügel (16) nach Anspruch 4, **dadurch gekennzeichnet, dass** der Kraftgenerator eine oszillierbare Spule sowie einen magnetisierbaren Stator umfasst.

7. Tragflügel (16) nach Anspruch 5, **dadurch gekennzeichnet, dass** der Läufer (26) beidendig über je eine Doppel-Balkenfeder (30) ortsfest abgestützt ist.

8. Tragflügel (16) nach einem der vorherigen Ansprüche, **dadurch gekennzeichnet, dass** der Kraftgenerator (24) als Stromgenerator schaltbar ist.

9. Tragflügel (16) nach Anspruch 1, **dadurch gekennzeichnet, dass** je Winglet (18) zwei oder mehr Kraftgeneratoren (24) mit unterschiedlichen Eigenfrequenzen vorgesehen sind.

10. Tragflügel (16) nach einem der Ansprüche 1 bis 3, **dadurch gekennzeichnet, dass** der Kraftgenerator (24) bewegte Massen in Form von beweglichen Fluiden umfasst.

11. Flugzeug (10), mit einem Tragflügel (16) nach wenigstems einem der vorhergehenden Ansprüche.

## Claims

1. Wing (16) for an aircraft having a device which is provided on the wing tip and intended for reducing structural vibrations by an oscillating body, **characterized in that** a winglet (18) having a force generator (24) integrated therein which acts in the vertical direction is arranged on the wing tip.

2. Wing (16) according to Claim 1, **characterized in that** the natural frequency of the force generator (24) is tuned to the first or second symmetrical or antisymmetrical flexural wing vibration.

3. Wing (16) according to Claim 1, **characterized in that** the natural frequency of the force generator is tuned to an average vibration frequency of the relevant frequency range.

4. Wing (16) according to Claim 1, **characterized in that** each force generator (24) is designed as a vertically oriented linear motor having a movable primary or secondary part (26).

5. Wing (16) according to Claim 4, **characterized in that** the force generator (24a) comprises a magnetic or magnetizable rotor (26) which is capable of oscillating vertically via at least one spring device (30), which is supported in a positionally fixed manner, and a guide (30) and is surrounded by a stator coil (28).

6. Wing (16) according to Claim 4, **characterized in that** the force generator comprises an oscillateable coil and a magnetizable stator.

7. Wing (16) according to Claim 5, **characterized in that** the rotor (26) is supported in a positionally fixed manner at both ends with a respective double beam spring (30).

8. Wing (16) according to one of the preceding claims, **characterized in that** the force generator (24) can be switched as a current generator.

9. Wing (16) according to Claim 1, **characterized in that** two or more force generators (24) having different natural frequencies are provided for each winglet (18).

10. Wing (16) according to one of Claims 1 to 3, **characterized in that** the force generator (24) comprises moving masses in the form of movable fluids.

11. Aeroplane (10) having a wing (16) according to at least one of the preceding claims.

## Revendications

1. Voilure (16) pour un aéronef, comprenant un arrangement se trouvant au niveau de la pointe de voilure pour réduire les vibrations structurelles par un corps oscillant, **caractérisée en ce qu'**une ailette verticale marginale (18) dans laquelle est intégré un générateur de force (24) agissant dans le sens vertical est disposée au niveau de la pointe de voilure.

2. Voilure (16) selon la revendication 1, **caractérisée en ce que** la fréquence propre des générateurs de force (24) est accordée sur la première ou la deuxième vibration de flexion d'aile symétrique ou asymétrique.

3. Voilure (16) selon la revendication 1, **caractérisée en ce que** la fréquence propre des générateurs de force est accordée à une fréquence de vibration centrale de la plage de fréquences concernée.

4. Voilure (16) selon la revendication 1, **caractérisée en ce que** chaque générateur de force (24) est réalisé sous la forme d'un moteur linéaire orienté verticalement avec une partie primaire ou secondaire (26) mobile.

5. Voilure (16) selon la revendication 4, **caractérisée en ce que** le générateur de force (24a) comporte un rotor (26) magnétique ou magnétisable qui peut osciller verticalement par le biais d'au moins un dispositif à ressort (30) soutenu en position fixe ainsi que d'un guide (30) et qui est entouré par une bobine de stator (28).

6. Voilure (16) selon la revendication 4, **caractérisée en ce que** le générateur de force comporte une bobine pouvant osciller ainsi qu'un stator magnétisable.

7. Voilure (16) selon la revendication 5, **caractérisée en ce que** le rotor (26) est soutenu en position fixe aux deux extrémités respectivement par le biais d'un double ressort à barre (30).

8. Voilure (16) selon l'une des revendications précédentes, **caractérisée en ce que** le générateur de force (24) peut être commuté en tant que générateur de courant.

9. Voilure (16) selon la revendication 1, **caractérisée en ce que** chaque ailette verticale marginale (18) comporte deux générateurs de force (24) ou plus ayant des fréquences propres différentes.

10. Voilure (16) selon l'une des revendications 1 à 3, **caractérisée en ce que** le générateur de force (24) comporte des masses déplacées sous la forme de fluides mobiles.

11. Aéronef (10) comprenant une voilure (16) selon au moins l'une des revendications précédentes.
